# EUROPEAN PATENT APPLICATION

(11) **EP 1 418 583 A2**
(43) Date of publication of application: **12.05.2004**
(21) Application number: 03256406.4
(22) Date of filing: 10.10.2003
(51) Int. Cl.: G11B 20/12

(54) **Data recording device, data recording method, program and data recording medium**

(30) Priority: 23.10.2002 JP 2002308601
(71) Applicant: Ricoh Company Ltd., Tokyo 143-8555 (JP)
(72) Inventor: Sasaki, Yoshiyuki, Machida-shi Tokyo (JP)
(74) Representative: Lamb, Martin John Carstairs

(57) **Abstract**

A data recording method is disclosed that is capable of correctly reading data from a rewritable recording medium including both recorded regions and unrecorded regions. In response to a request of recording data on the recording disk, a run-in block is recorded by recording one ECC block of dummy data in the region preceding the recording destination region, if the region preceding the recording destination region is an unrecorded region, and the flag bit in the bitmap corresponding to the run-in block is registered to be "unrecorded". Then, data are recorded in the recording destination region, and subsequently, the flag bit in the bitmap corresponding to the recording destination region is registered to be "recorded". Then, the operation of data recording is completed.

## Description

### BACKGROUND OF THE INVENTION

### 1. Field of the Invention

The present invention relates to a data recording device, such as a CD-R/RW drive or a DVD+RW drive, for recording data on a recording medium, such as a CD-RW disk or a DVD+RW disk; a data recording method for recording data on the recording medium; a program executed by a computer for recording data on the recording medium, and a storage medium with the program recorded and readable by the computer.

### 2. Description of the Related Art

CD-RW disks and DVD+RW disks are typical rewritable recording media. A DVD+RW disk has physical properties similar to a DVD-ROM disk, which is a read-only DVD disk, and thus a DVD+RW disk may be read with a DVD-ROM drive. In order to reproduce data recorded on a DVD+RW disk with a DVD-ROM drive, a frame synchronization signal and a position signal should be embedded in data recorded on the DVD+RW disk.

However, if the DVD+RW disk has not been recorded with any data, or the DVD+RW disk has both regions recorded with data (referred to as "recorded region", below) and regions not recorded with data (referred to as "unrecorded region", below), the DVD-ROM drive cannot generate the frame synchronization signal from data on the DVD+RW disk. As a result, the DVD-ROM drive cannot perform stable spindle servo (control of revolution a motor for rotating the disk), and cannot perform seeking operations for reading desired sectors of the recorded data. Consequently, it is difficult to reproduce data on the DVD+RW disk. Therefore, when using a DVD+RW disk, usually the DVD+RW disk is formatted to record data all over the disk beforehand.

But the time required for formatting the DVD+RW disk is in proportion to the capacity of the disk, and usually it takes a long time. In addition, since data cannot be recorded or reproduced before the format operation is completed, this formatting procedure before usage of the DVD+RW disk is cumbersome to users.

On the recording surface of a DVD+RW disk, wobbling grooves are formed in advance, and from the reproduced signals of the wobbling grooves, signals used in the spindle servo (spindle servo information) and address signal (address information) can be generated. Therefore, if a DVD+RW drive is capable of recording data on and reproducing data from a DVD+RW disk, it is not always necessary to record data on the entire recording region of the DVD+RW disk in advance in order to reproduce data on the disk.

Therefore, when formatting a DVD+RW disk, it is possible to perform the so-called background formatting, namely, in response to a request of formatting the DVD+RW disk from a user, a message signaling completion of the format operation is sent to the user (for example, a host computer), even when only a part of a lead-in area is recorded with data (this is called "initial formatting operation"); the remaining area of the DVD+RW is written with dummy data when the DVD+RW disk is not being accessed by the user. In addition, the DVD+RW disk may be ejected from the DVD+RW drive even before recording data to the disk is finished.

In addition, the DVD+RW disk can be ejected from the DVD+RW drive even if both recorded regions and unrecorded regions exist on the disk. Alternatively, the DVD+RW disk may be ejected from the DVD+RW drive after recording a temporary lead-out (TLO) on the DVD+RW disk so that the DVD+RW disk can be read by a DVD-ROM drive while being formatted. In this case, the TLO may be recorded after recording dummy data on the unrecorded regions outside the most peripheral recorded region on the DVD+RW disk.

A DVD+RW drive performs data recording or reproducing even when the destination region for recording or reproducing data specified by the host computer is an unrecorded region. When receiving a request from the user of reproducing data from an unrecorded region, the DVD+RW drive generates dummy data and transmits the dummy data to the user.

In this way, after notification of completion of the formatting operation to the user, a DVD+RW drive can randomly record data on and reproduce data from any place in a user data region of the DVD+RW disk.

Further, in the background formatting by the DVD+RW drive, the user records dummy data on the DVD+RW disk in regions except those randomly recorded with information data; therefore, it is necessary to store information in the user data region about recording states of all recorded regions and unrecorded regions on the DVD+RW disk. For this reason, usually such information is stored for every ECC (Error Correction Code) block, which includes sixteen sectors, and is the smallest recording unit on the DVD+RW disk. This information of every ECC block is stored and managed in a table (referred to as "bitmap", below), and the table is allocated in the FDCB (Formatting Disk Control Block) in a lead-in area on the DVD+RW disk.

In the case of a CD-RW disk on which a bitmap is not allocated, usually, a drive for randomly recording data on the CD-RW disk by background formatting allocates the bitmap in a memory inside the drive.

However, although the DVD+RW drive can extract the address signal and the signal used for spindle servo even from unrecorded regions on the DVD+RW disk, the DVD+RW drive cannot correctly reproduce data from a region specified by a user (referred to as "reproduction source region") if the region preceding the reproduction source region is an unrecorded region.

When reading data on the DVD+RW disk, the DVD+RW drive moves an optical pickup to a position in front of the sector of the reproduction source region specified by the user (seeking operation), traces the addresses on the DVD+RW disk, and imports data on the DVD+RW disk to a cache memory in the drive when the address of the reproduction source region is detected.

When reproducing the imported data, the DVD+RW drive extracts the address signal and the signal used for spindle servo with reference to the frame synchronization signal and the position signal included in the imported data, and thus, in order to correctly reproduce data at the desired address, a correct address signal must be extracted when tracing the address data of the DVD+RW disk. That is, data should be recorded in the region preceding the reproduction source region specified by the user, and thereby the DVD+RW drive should extract the address signal and the signal for spindle servo from the frame synchronization signal and the position signal included in the data. recorded in the region preceding the reproduction source region. For this purpose, in the DVD+RW disk, when recording data to an unrecorded region, one ECC block (16 sectors) of dummy data (it is referred to as "run-in block") is also recorded in the region preceding the recording destination region (that is, the unrecorded region).

In the related art, for example, as disclosed in Japanese Laid Open Patent Application No. 10-112166 and Japanese Laid Open Patent Application No. 11-086418, the recorded regions on a rewritable disk are registered to be "recorded" in a bitmap, and there is no more processing.

However, on a rewritable recording medium, when the region preceding a recording destination region specified by the user is an unrecorded region, if desired data are recorded to the recording destination region, while dummy data are recorded in the preceding region and the preceding region is registered to be "recorded" in the bitmap, the run-in block, that is, the preceding region recorded with dummy data, also becomes "recorded" in the bitmap, and because the region preceding the run-in block is still unrecorded, data cannot be correctly read from the run-in block.

Because after the initial formatting operation of a rewritable recording medium, it is possible to record data to and reproduce data from any place of the user data region on the recording medium, the run-in block, which is recorded with dummy data, can also be reproduced.

But, in the related art, the flag in the bitmap corresponding to the run-in block is set to be "recorded". Therefore, when it is desired to reproduce data from the rewritable recording medium, if the region preceding the run-in block is also an unrecorded region, data in the run-in block cannot be correctly read.

Originally, the run-in block is not a region having desired information data recorded by the user; therefore, it would be sufficient for the DVD+RW drive or other data recording devices to generate dummy data and transmit them to the user. In the related art, however, because a run-in block and a region having user data are both set to be "recorded" in the bitmap, the DVD+RW drive cannot distinguish between the run-in block and the region having user data, and it is impossible to generate dummy data from the run-in block.

### SUMMARY OF THE INVENTION

Accordingly, it is a general object of the present invention to solve one or more problems of the related art.

A specific object of the present invention is to provide a data recording device capable of correctly reading data recorded on a rewritable recording medium including recorded regions and unrecorded regions, a method thereof, a program executed by a computer for driving the data recording device to record data on and reproduce data from the recording medium, and a storage medium with the program stored thereon.

According to a first aspect of the present invention, there is provided a data recording device, comprising: a recording unit that records data on a recording medium, said recording medium including a plurality of recorded regions each having data recorded by the recording unit and a plurality of unrecorded regions without any data recorded; and a recording state determination unit that stores recording state data for distinguishing the recorded regions from the unrecorded regions; wherein the recording unit includes a mark recording unit configured to record a mark in one of the unrecorded regions preceding an object region to which the recording unit is to record data, said mark enabling reading of the object region; and the recording state determination unit identifies said marked region as one of the unrecorded regions.

The mark may include dummy data used for generating a synchronization signal when reading data on the recording medium. Moreover, the mark may include one ECC block of dummy data when the recording medium is in compliance with the DVD+RW disk standard.

The recording state determination unit may store the recording state data for each minimum recording region of the recording medium to determine a recording state of each of the minimum recording regions. Moreover, the recording state determination unit may distinguish the recorded region from the unrecorded region based on a bitmap including a plurality of one-bit recording state flags.

The data recording device may further comprise a recording state flag storing unit configured to store the recording state flags. In addition, the data recording device may further comprise a recording state flag recording unit configured to record the recording state flags to a recording state flag recording region in the recording medium. Furthermore, the recording state flag recording region is allocated in the Formatting Disk Control Block (FDCB) in a lead-in area of the recording medium when the recording medium is in compliance with the DVD+RW disk standard.

According to a second aspect of the present invention, there is provided a method for recording data on a recording medium including a plurality of recorded regions each having data recorded and a plurality of unrecorded regions without any data recorded, the method comprising the steps of: storing recording state data for distinguishing the recorded regions from the unrecorded regions; recording a mark in one of the unrecorded regions preceding an object region to which data are to be recorded, said mark enabling reading of the object region; and identifying said marked region as one of the unrecorded regions.

According to a third aspect of the present invention, there is provided a program executable by a computer for recording data on a recording medium including a plurality of recorded regions each having data recorded and a plurality of unrecorded regions without any data recorded, the program comprising the steps of: storing recording state data for distinguishing the recorded regions from the unrecorded regions; recording a mark in one of the unrecorded regions preceding an object region to which data are to be recorded, said mark enabling reading of the object region; and identifying said marked region as one of the unrecorded regions.

According to a fourth aspect of the present invention, there is provided a storage medium that stores a program executable by a computer for recording data on a recording medium including a plurality of recorded regions each having data recorded and a plurality of unrecorded regions without any data recorded, the program comprising the steps of: storing recording state data for distinguishing the recorded regions from the unrecorded regions; recording a mark in one of the unrecorded regions preceding to an object region to which data are to be recorded, said mark enabling reading of the object region; and identifying said marked region as one of the unrecorded regions.

According to a fifth aspect of the present invention, there is provided a data recording system comprising a host computer; and a data recording device, wherein the data recording device comprises: a recording unit that records data on a recording medium, said recording medium including a plurality of recorded regions each having data recorded by the recording unit and a plurality of unrecorded regions without any data recorded; and a recording state determination unit that stores recording state data for distinguishing the recorded regions from the unrecorded regions; wherein the recording unit includes a mark recording unit configured to record a mark in one of the unrecorded regions preceding an object region to which the recording unit is to record data, said mark enabling reading of the object region; and the recording state determination unit identifies said marked region as one of the un-recorded regions.

According to the present invention, the un-recorded region preceding a region to which data are to be recorded is identified to be "unrecorded" even after a mark is recorded in the unrecorded region. Therefore, when reproducing data in this marked region, for example, a run-in block, it is possible to generate only dummy data to provide signals used in data reproduction. As a result, it is possible to prevent errors in reproduction, and correctly perform data reproduction.

These and other objects, features, and advantages of the present invention will become more apparent from the following detailed description of preferred embodiments given with reference to the accompanying drawings.

### BRIEF DESCRIPTION OF THE DRAWINGS

FIG. 1 is a block diagram showing a configuration of an optical disk recording and reproducing device according to an embodiment of the present invention;
FIG. 2 is a schematic view showing a format of a recording region of a DVD+RW disk, as an example of the optical disk 11;
FIG. 3 is a table showing a format of data in the FDCB 37 shown in FIG. 2;
FIG. 4 is a flow chart showing the operation of recording data to the DVD+RW disk 11 in response to a request from a user;
FIG. 5 is a flow chart showing the operation of reproducing data from the DVD+RW disk 11 in response to a request from the user; and
FIG. 6 is a flow chart showing another example of the operation of reproducing data from the DVD+RW disk 11 in response to a request from the user.

### DESCRIPTION OF THE PREFERRED EMBODIMENTS

Below, preferred embodiments of the present invention are explained with reference to the accompanying drawings.

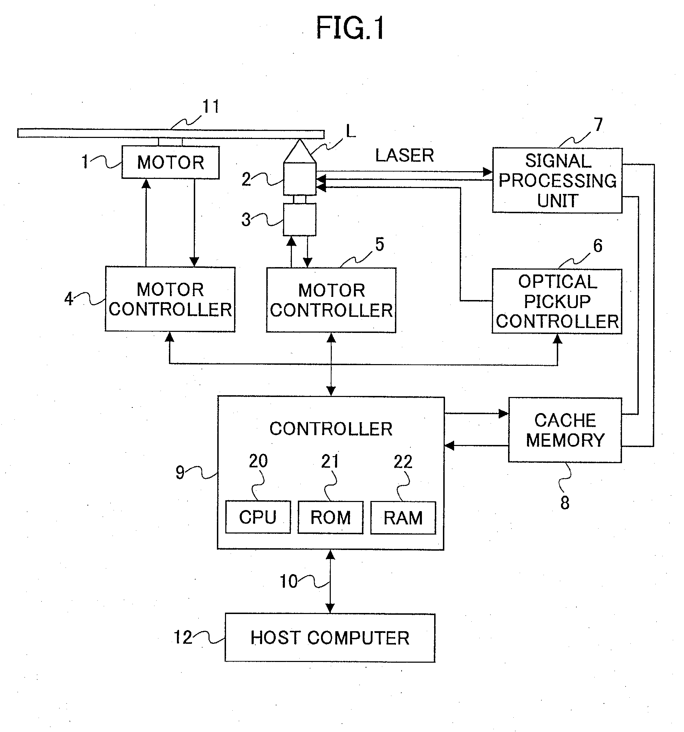

FIG. 1 is a block diagram showing a configuration of an optical disk recording and reproducing device according to an embodiment of the present invention.

The optical disk recording and reproducing device illustrated in FIG. 1, for example, is a data recording device, such as a CD-R/RW drive or a DVD+RW. drive, for recording data on a rewritable optical disk 11, such as a CD-RW disk or a DVD+RW disk, and for reproducing data on the optical disk 11. The optical disk recording and reproducing device is connected to a host computer 12 through an external interface 10.

The optical disk recording and reproducing device includes a spindle motor 1 for rotating the optical disk 11, an optical pickup 2 for emitting a laser for recording data on or reproducing data from the optical disk 11, an optical pickup controller 6 for controlling emission of the laser from the optical pickup 2, a motor 3 for moving the optical pickup 2 along a radial direction of the optical disk 11, a motor controller 4 for controlling rotation of the motor 1, a motor controller 5 for controlling rotation of the motor 3, a signal processing unit 7 for processing signals from and to the optical pickup 2, and a cache memory 8 for temporarily storing data to be recorded to the optical disk 11 by a controller 9 and data reproduced from the optical disk 11. The external interface 10 transfers data between the host computer 12 and the optical disk recording and reproducing device, and may be ATAPI, SCSI, IEEE1394, or USB, for example.

The controller 9 controls the whole optical disk recording and reproducing device. The controller 9 includes a CPU 20 that performs various calculations and controls the entire device to realize functions related to the present invention; a ROM 21 (Read Only Memory) or any non-volatile memory on which programs for executing control of the device, functions related to the present invention, and various kinds of data are stored; and a RAM 22 (Random Access Memory) acting as a working area when the CPU 20 performs various calculations and controls.

The ROM 21 corresponds to the "storage medium" of the present invention. The program of the present invention is stored in the ROM 21 by the controller 9. This program may be an independent application program, or a part of an application package; it can be made specific to a certain OS or be independent of the OS.

Further, by storing the program of the present invention in a recording medium, for example, an optical disk such a CD or a DVD, a flexible disk, or an MO (Magneto Optical disk), the program can be installed in the optical disk recording and reproducing device from the host computer 12. Consequently, it is possible to easily add functions due to the present invention to a conventional optical disk recording and reproducing device.

Although not illustrated, the host computer 12 includes, for example, a CPU, a flash ROM (FROM), and a RAM, and by executing programs stored on the ROM, directing the optical disk recording and reproducing device to record data to or reproduce data from the optical disk 11.

Below, explanations are made of a case in which the optical disk 11 is in compliance with the DVD+RW disk standard, namely, the optical disk recording and reproducing device of the present embodiment records data to or reproduces data from a DVD+RW disk.

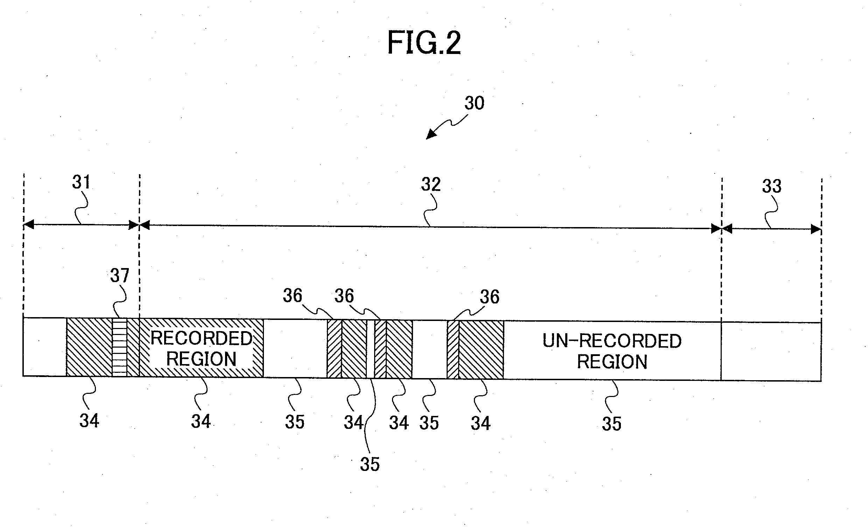

FIG. 2 is a schematic view showing a format of a recording region of a DVD+RW disk, as an example of the optical disk 11.

The recording region 30 of a DVD+RW disk is divided into a lead-in zone 31, a data zone 32, and a lead out zone 33, which correspond to the lead-in region, user data region, and lead-out region, respectively, as mentioned above.

When the lead-in zone 31 is recorded with data upon a request of formatting the disk from a user, for example, the host computer 12, the user can randomly record data on and reproduce data from any place of the data zone 32, even if only a part of the lead-in zone 31 is recorded. Therefore, both recorded regions 34 and unrecorded regions 35 exist in the data zone 32.

When the region preceding a region specified by the user to record data (referred to as "recording destination region" below) is an unrecorded region, one ECC block of dummy data (referred to as "run-in block") is recorded in this unrecorded region. This run-in block makes the recording destination region readable. Specifically, the run-in block enables generation of a correct synchronization signal for a reproduction circuit when reading data. Under the DVD+RW disk standard, it is required that one ECC block of dummy data be recorded.

Under the DVD+RW disk standard, an ECC block includes sixteen sectors, and is the smallest data recording region in the data zone 32. The reproduction circuit corresponds to the data reproduction functions of the motor controller 4, the motor controller 5, the optical pickup controller 6, and the signal processing unit 7.

In the lead in zone 31, there is recorded data indicative of formatting states, or a Formatting Disk Control Block (FDCB) 37 including data indicative of the recording states of recording regions in the data zone 32. For example, the FDCB 37 has a bitmap including bits (recording state flags) indicating the recording states of recording regions in the data zone 32. For example, each flag in the bitmap indicates a recording state of an ECC block. Generally, the smallest recording region on a DVD+RW disk is monitored by the corresponding flag in the bitmap.

For a CD+RW disk, the smallest recording region is a packet; therefore, in this case, the recording state of each packet is monitored by the corresponding flag in the bitmap.

Although a run-in block 36 is recorded in an unrecorded region 35, the value of the corresponding flag is not modified, that is, the flag indicates that the run-in block is "unrecorded".

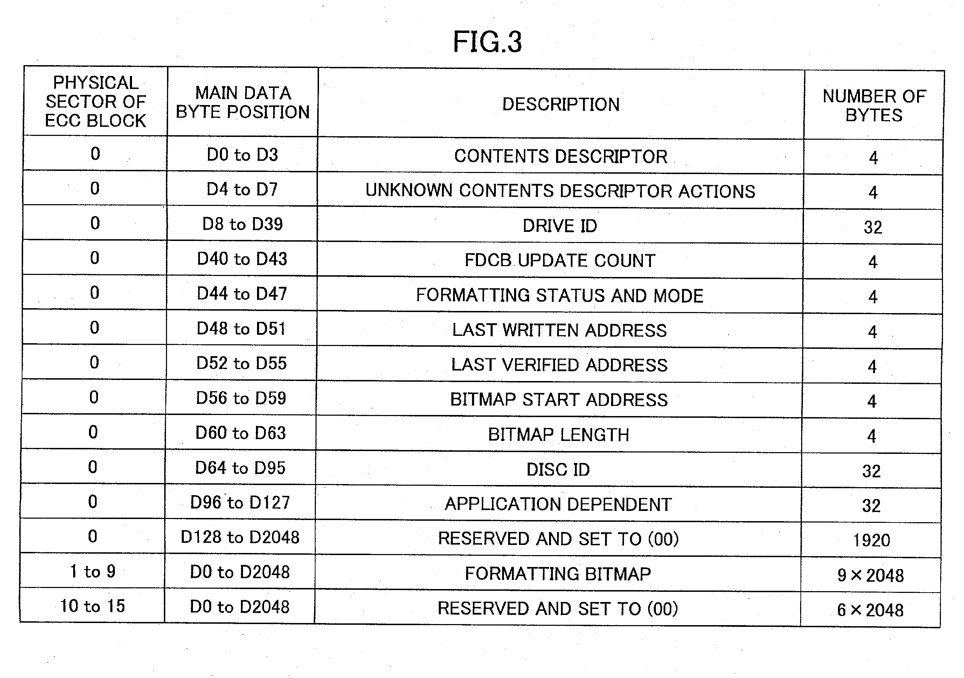

FIG. 3 is a table showing a format of data in the FDCB 37 shown in FIG. 2.

The FDCB 37 is formed by one ECC block of data (32768 bytes, namely, 16 sectors). The table in FIG. 3 includes columns of "Physical Sector of ECC Block", "Main Data Byte Position", "Description", and "Number of Bytes", and indicating that a number of descriptions, as shown by the data in the columns of "Number of Bytes" and "Description", are recorded at each byte position as shown by the data in the column of "Main Data Byte Position" in the physical sectors as shown by the data in the column of "Physical Sector of ECC Block".

In FIG. 3, the descriptions in the column of "Description" includes Contents Descriptor, Unknown Contents Descriptor Actions, Drive ID, FDCB update count, Formatting Status and Mode, Last Written Address, Last verified Address, Bitmap Start Address, Bitmap Length, Disk ID, Application Dependent, Reserved and set to (00) , Formatting Bitmap, and Reserved and set to (00) .

Data in the bitmap includes bitmap starting address, indicating the address in the bitmap which is specified by the first bit in the data zone 32, bitmap length, indicating the number of the ECC blocks in the data zone 32 managed by the bitmap, and formatting bitmap including one-bit flags each indicating the recording state (recorded or unrecorded) of an ECC block in the data zone 32.

Other data are well known and detailed descriptions are omitted. For example, "formatting status" indicates state of formatting, that is, formatting is undergoing or completed. "Last written address" indicates the present position of recording the dummy data by means of background formatting.

Next, explanations are made of the operations of the optical disk recording and reproducing device of the present embodiment.

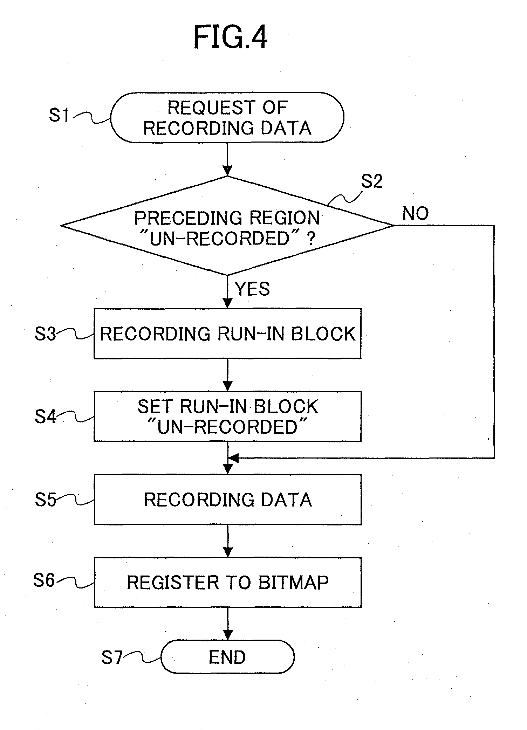

FIG. 4 is a flow chart showing the operation of recording data to the DVD+RW disk 11 in response to a request from a user.

In step S1, the host computer 12 (user) makes a request to record data on the DVD+RW disk 11.

In step S2, with reference to the bitmap in FDCB 37 in the lead in zone 31 of the DVD+RW disk 11, CPU 20 in the controller 9 determines whether the region preceding the recording destination region on the DVD+RW disk 11 is an unrecorded region or not.

If the region preceding the recording destination region is a recorded region, the routine proceeds to step S5, otherwise, the routine goes to step S3.

In step S3, one ECC block of dummy data are recorded in the region preceding the recording destination region, namely, recording a run-in block in the region preceding the recording destination region.

In step S4, the one-bit flag in the formatting bitmap region in FDCB 37 corresponding to the run-in block is registered to be "un-recorded". For example, the flag may be set to "1".

In step S5, data from the host computer 12 are recorded to the recording destination region on the DVD+RW disk specified by the host computer 12.

In step S6, the one-bit flag in the formatting bitmap region in FDCB 37 corresponding to the recording destination region is registered to be "recorded". For example, the flag may be set to "0".

In step S7, the operation of data recording is completed.

If the flag of the run-in block is originally set to be "unrecorded", the step S4 may be omitted. In addition, the step S3 for recording dummy data and the step S5 for recording user data may be performed at the same time.

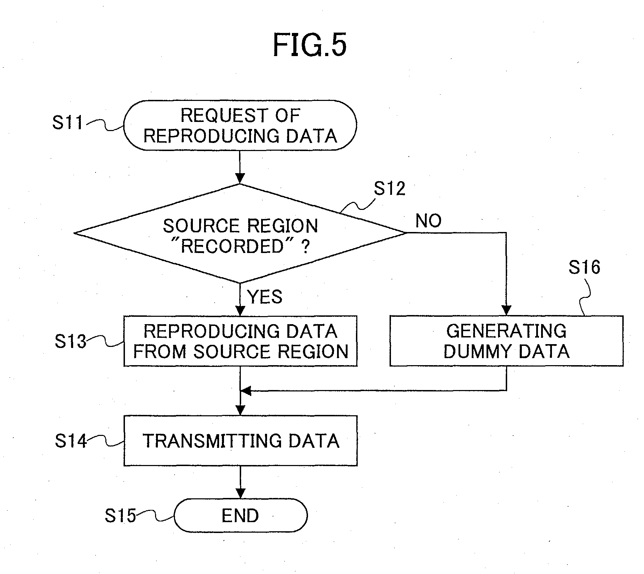

FIG. 5 is a flow chart showing the operation of reproducing data from the DVD+RW disk 11 in response to a request from the user.

In step S11, the host computer 12 (user) makes a request to reproduce data on the DVD+RW disk 11.

In step S12, with reference to the bitmap in FDCB 37 in the lead in zone 31 of the DVD+RW disk 11, CPU 20 in the controller 9 determines whether the reproducing source region on the DVD+RW disk 11 is a recorded region.

If the reproducing source region is a recorded region, for example, the flag in the formatting bitmap region in FDCB 37 corresponding to the reproducing source region is "0", the routine proceeds to step 13, otherwise, the routine goes to step S16.

In step S13, data recorded in the reproducing source region are read out.

In step S14, the data read from the reproducing source region are transmitted to the host computer 12.

In step S15, the operation of data reproduction is completed.

If it is determined that the reproducing source region is an unrecorded region in step S12, for example, the flag in the formatting bitmap region in FDCB 37 corresponding to the reproducing source region is "1", in step S16, dummy data are generated, and in step S14, the dummy data are transmitted to the host computer 12 as the data to be reproduced. Then, in step S15, the operation of data reproduction is completed.

In this way, because the flag in the bitmap corresponding to the run-in block indicates that the run-in block is an unrecorded region, when the host computer makes a request to reproduce data in this block, dummy data are generated and are transmitted to the host computer as the data to be reproduced. As a result, it is possible to prevent errors in reproduction. As the run-in block is registered to be "unrecorded" in the bitmap, this block may happen to be overwritten by other dummy data in background formatting. This overwriting does not produce any adverse influences on the subsequent data recording and data reproduction as this block includes only dummy data.

In the above data reproduction operation, it is described that CPU 20 in the controller 9 determines the recording state of the reproducing source region on the DVD+RW disk 11 with reference to the bitmap in FDCB 37 in the lead in zone 31 of the DVD+RW disk 11. The determination may also be performed by generating the address of the reproduction source region without referring to the bitmap, and the bitmap is referred to only when errors occur in reading data with the generated address.

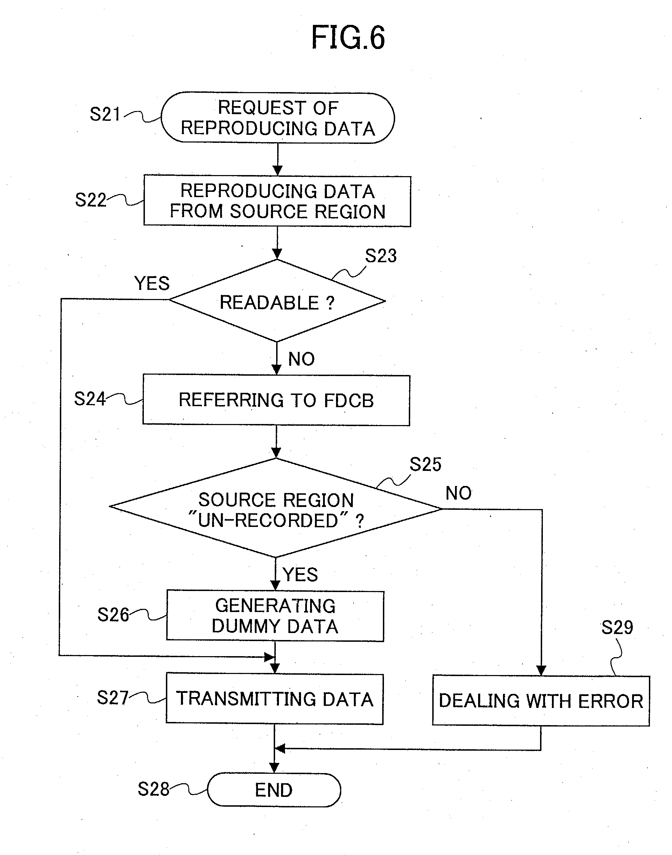

FIG. 6 is a flow chart showing another example of the operation of reproducing data from the DVD+RW disk 11 in response to a request from the user.

In step S21, the host computer 12 (user) makes a request to reproduce data on the DVD+RW disk 11.

In step S22, CPU 20 in the controller 9 reproduces data in the specified reproducing source region.

In step S23, CPU 20 determines whether data in the reproducing source region can be read.

If data in the reproducing source region are not readable, the routine proceeds to step 24, otherwise, the routine goes to step S27.

In step S24, CPU 20 in the controller 9 refers to the bitmap in FDCB 37 in the lead in zone 31 of the DVD+RW disk 11.

In step S25, according to the corresponding flag in the bitmap, CPU 20 in the controller 9 determines whether the reproducing source region on the DVD+RW disk 11 is an unrecorded region.

If the reproducing source region is an unrecorded region, for example, the flag in the formatting bitmap region in FDCB 37 corresponding to the reproducing source region is "1", the routine proceeds to step 26, otherwise, the routine goes to step S29.

In step S26, dummy data are generated.

In step S27, the dummy data are transmitted to the host computer 12 as the data to be reproduced.

In step S28, the operation of data reproduction is completed.

If it is determined that the reproducing source region is a recorded region in step S25, for example, the flag in the formatting bitmap region in FDCB 37 corresponding to the reproducing source region is "0", the routine proceeds to step 29, and the CPU 20 sends a message to notify the host computer 12 of a data reading error. Then, proceeding to step 28, the operation of data reproduction is ended. In this case, the operation is ended due to occurrence of an error.

Below, additional explanations are made of reproduction of data in recorded regions recorded by the optical disk recording and reproducing device, and data in the run-in block on the optical disk 11.

When reproducing data recorded in the recorded regions on the optical disk 11, since the corresponding flag in the bitmap indicates that the region to be reproduced is "recorded", and a run-in block is recorded in front of the reproducing source region, CPU 20 can read out the data from the optical disk 11 by normal reading operations.

When reproducing data in the run-in block, which is originally an unrecorded region and recorded with dummy data presently, since the corresponding flag in the bitmap indicates that the block is "unrecorded", dummy data are generated and transmitted to the host computer 12 without performing operations of reading data from the optical disk 11. Therefore, the optical disk recording and reproducing device is capable of responding to a request from the host computer for reproducing data in a run-in block preceding a recorded region.

Suppose the flag corresponding to the run-in block in the bitmap is registered to be "recorded". In this case, CPU 20 will perform a reading operation, but if the region preceding the run-in block is also an unrecorded region, CPU 20 cannot read data from the run-in block.

Therefore, as described above, by registering the flag in the bitmap corresponding to the run-in block to be "unrecorded", the optical disk recording and reproducing device is capable of correctly responding to requests from the host computer 12 for reproducing data in any place in the data zone even if the optical disk 11 is being formatted.

In the above description of the optical disk recording and reproducing device, the optical disk 11 is implemented to be a DVD+RW disk having a bitmap recorded in the recording region thereof. It should be noted that the optical disk 11 does not need to contain a region for allocating a bitmap as long as the optical disk recording and reproducing device is capable of responding to requests from the host computer for random recording and reproduction.

For example, in the case of a CD-RW disk, there is not a region for allocating a bitmap in the recording region thereof, therefore, the bitmap may be allocated in RAM 22 of the optical disk recording and reproducing device, namely, RAM 22 corresponds to the recording state flag storing unit of the present invention.

Further, unused regions on the CD-RW disk may be used to allocate a bitmap, and the recording state flags may be recorded in this unused region. In this case, CPU 20 functions as the recording state flag recording unit of the present invention.

In this way, by recording a bitmap on the optical disk 11, even if both recorded regions and unrecorded regions exit in the data zone of the optical disk 11, such as a CD-RW disk and a DVD+RW disk, it is possible to normally read data from the unrecorded regions, thereby achieving compatibility of optical disks between different optical disk recording and reproducing devices.

In the above, although the description is made by taking an optical disk recording and reproducing device as an example, the present invention is applicable to any kind of data recording device capable of randomly recording data to and reproducing data from a recording medium.

While the present invention is described with reference to specific embodiments chosen for purpose of illustration, it should be apparent that the invention is not limited to these embodiments, but numerous modifications could be made thereto by those skilled in the art without departing from the basic concept and scope of the invention.

Summarizing the effects of the present invention, even though both recorded regions and unrecorded regions exit in a rewritable recording medium, data recorded in such a recording medium can be correctly read out.

This patent application is based on Japanese Priority Patent Application No. 2002-308601 filed on October 23, 2002, the entire contents of which are hereby incorporated by reference.

## Claims

1. A data recording device, comprising:
a recording unit that records data on a recording medium, said recording medium including a plurality of recorded regions each having data recorded by the recording unit and a plurality of unrecorded regions without any data recorded; and
a recording state determination unit that stores recording state data for distinguishing the recorded regions from the unrecorded regions;
wherein
the recording unit includes a mark recording unit configured to record a mark in one of the unrecorded regions preceding an object region to which the recording unit is to record data, said mark enabling reading of the object region; and
the recording state determination unit identifies said marked region as one of the unrecorded regions.

2. The data recording device as claimed in claim 1, wherein the mark includes dummy data used for generating a synchronization signal when reading data on the recording medium.

3. The data recording device as claimed in claim 1, wherein the mark includes one ECC block of dummy data when the recording medium is in compliance with a DVD+RW disk standard.

4. The data recording device as claimed in claim 1, wherein the recording state determination unit stores the recording state data for each minimum recording region of the recording medium to determine a recording state of each of the minimum recording regions.

5. The data recording device as claimed in claim 1, wherein the recording state determination unit distinguishes the recorded region from the unrecorded region based on a bitmap including a plurality of one-bit recording state flags.

6. The data recording device as claimed in claim 5, further comprising a recording state flag storing unit configured to store the recording state flags.

7. The data recording device as claimed in claim 5, further comprising a recording state flag recording unit configured to record the recording state flags to a recording state flag recording region in the recording medium.

8. The data recording device as claimed in claim 7, wherein the recording state flag recording region is allocated in a Formatting DisK Control Block (FDCB) in a lead-in area of the recording medium, when the recording medium is in compliance with a DVD+RW disk standard.

9. A method for recording data on a recording medium including a plurality of recorded regions each having data recorded and a plurality of unrecorded regions without any data recorded, the method comprising the steps of:
storing recording state data for distinguishing the recorded regions from the unrecorded regions;
recording a mark in one of the unrecorded regions preceding an object region to which data are to be recorded, said mark enabling reading of the object region; and
identifying said marked region as one of the unrecorded regions.

10. A program executable by a computer for recording data on a recording medium including a plurality of recorded regions each having data recorded and a plurality of unrecorded regions without any data recorded, the program comprising the steps of:
storing recording state data for distinguishing the recorded regions from the unrecorded regions;
recording a mark in one of the unrecorded regions preceding an object region to which data are to be recorded, said mark enabling reading of the object region; and
identifying said marked region as one of the unrecorded regions.

11. A storage medium that stores a program executable by a computer for recording data on a recording medium including a plurality of recorded regions each having data recorded and a plurality of unrecorded regions without any data recorded, the program comprising the steps of:
storing recording state data for distinguishing the recorded regions from the unrecorded regions;
recording a mark in one of the unrecorded regions preceding an object region to which data are to be recorded, said mark enabling reading of the object region; and
identifying said marked region as one of the unrecorded regions.

12. A data recording system comprising:
a host computer; and
a data recording device,
wherein
the data recording device comprises:
a recording unit that records data on a recording medium, said recording medium including a plurality of recorded regions each having data recorded by the recording unit and a plurality of unrecorded regions without any data recorded; and
a recording state determination unit that stores recording state data for distinguishing the recorded regions from the unrecorded regions;
wherein
the recording unit includes a mark recording unit configured to record a mark in one of the unrecorded regions preceding an object region to which the recording unit is to record data, said mark enabling reading of the object region; and
the recording state determination unit identifies said marked region as one of the unrecorded regions.
